# EUROPEAN PATENT SPECIFICATION

(11) **EP 3 020 978 B1**
(45) Date of publication and mention of the grant of the patent: **10.07.2019**
(21) Application number: 13889271.6
(22) Date of filing: 10.07.2013
(51) Int. Cl.: F04D 29/28, F04D 29/30, F04D 29/66

(54) **MULTI-BLADE FAN**
VENTILATOR MIT MEHREREN SCHAUFELN
VENTILATEUR À PALES MULTIPLES

(43) Date of publication of application: 18.05.2016
(73) Proprietor: Mitsubishi Electric Corporation, Tokyo 100-8310 (JP)
(72) Inventor: KATO, Yasuaki, Tokyo 100-8310 (JP)
(74) Representative: Mewburn Ellis LLP
(86) International application number: PCT/JP2013/068872
(87) International publication number: WO 2015/004751

(56) References cited:
- FR-A1- 2 020 367
- JP-A- H06 129 388
- JP-A- H08 135 596
- JP-A- H10 141 296
- JP-A- 2001 271 791
- US-B1- 6 345 956

## Description

### Technical Field

The present invention relates to a multiblade blower.

### Background Art

Multiblade blowers are air blowers devised to attain a large flow rate based on a centrifugal blower. An inner-outer diameter ratio of each blade is set relatively large in order to increase a diameter of an air inlet. The large inner-outer diameter ratio causes reduction in length of the blade in cross section horizontal to a rotation axis. Thus, the number of the blades is increased so as to prevent separation. Further, in general, in order to increase an effective head at a constant peripheral speed, forward curved vanes are employed so as to increase an outlet absolute speed, and a scroll casing is provided so as to change high dynamic pressure into static pressure. The multiblade blowers have simple configuration and are manufactured at low cost, and hence are widely used for general industrial applications, air conditioning applications, and the like.

An impeller arranged in the multiblade blower has a plurality of elongated blades arrayed in a circumferential direction, and entirely has a columnar shape when viewed in a rotation locus. An air inlet is formed on one side of the column or each of end surface regions having a circular shape on both sides of the column, and an air stream flowing through the air inlet passes between the blades, and flows out from a side surface region of a cylindrical shape in the columnar shape.

In order to attain the larger flow rate at a predetermined impeller diameter and a predetermined number of rotations, it is necessary to increase a dimension of the multiblade blower in a rotation axis direction. When the dimension in the rotation axis direction is increased, there is a problem in that sufficient volume of flow is not supplied to a region of each blade, which is far from the air inlet. Therefore, according to the technical document of Non Patent Literature 1, a ratio of the dimension in the rotation axis direction to an outer diameter of the impeller is appropriately set to about 0.5.

Further, there are known related-art multiblade blowers having a shape in which a motor is inserted into the impeller, which are devised to cope with a problem in that the motor hinders the flow. In Patent Literature 1, as an effort to supply the flow to the region of each blade, which is far from the air inlet in the rotation axis direction, an axial-flow fan is arranged inside the impeller of the multiblade blower.

### Citation List

### Patent Literature

[PTL 1] JP 2007-231863 A (Page 2 and FIG. 3)

JP H08 135596 A discloses an impeller for a centrifugal blower.

US 6,345,956 B1 discloses an impeller of a blower having air-guiding ribs with geometrical configurations.

### Non Patent Literature

[NPL 1] "Turbo Blower and Compressor" written by Takefumi Ikui, published by CORONA PUBLISHING CO., LTD. in August 25, 1988, page 295

### Summary of Invention

### Technical Problem

It is possible to increase the volume of the flow supplied to the region of each blade, which is far from the air inlet, by applying the related art, specifically, providing the axial-flow fan inside the multiblade blower having the large dimension in the rotation axis direction.

However, the flow passing through the axial-flow fan is applied with a swirling component from the axial-flow fan, and hence a vector of the flow varies between the front and back of the axial-flow fan. Therefore, even when the flow into the blades and the blade shape are appropriate on an upstream side of the axial-flow fan, the flow into the blades and the blade shape are inappropriate on a downstream side of the axial-flow fan. Thus, there is a problem in that the flow rate in accordance with the dimension of the multiblade blower in the rotation axis direction cannot be attained. Further, inappropriate flow into the blades and inappropriate blade shape cause a problem in that the separation at an inlet portion of the blade is significant to increase noise.

The present invention has been made to solve the problems
as described above, and it is an object of the present invention to provide a multiblade blower capable of attaining the large flow rate while suppressing noise.

### Solution to Problem

In order to achieve the above-mentioned object, according to the present invention, there is provided a multiblade blower as set forth in claim 1.

It is preferred that a distance in the impeller from an end portion on the air inlet side to a position connected to the intermediate support be from about 0.5 time to about 1.0 time as large as an outer diameter of the impeller.

It is preferred that a dimension of the impeller in a rotation axis direction be from 1.0 time to 1.5 times as large as the outer diameter of the impeller.

### Advantageous Effects of Invention

The multiblade blower according to the present invention is capable of attaining the large flow rate while suppressing noise.

### Brief Description of Drawings

FIG. 1 is an external view of a multiblade blower according to a first embodiment of the present invention.
FIG. 2 is a view for illustrating a cross section taken along the line II-II of FIG. 1.
FIG. 3 is a view for illustrating a cross section taken along the line III-III of FIG. 2.
FIG. 4 is a view for illustrating a cross section taken along the line IV-IV of FIG. 2.
FIG. 5 is an external view of a multiblade blower according
   to a second embodiment of the present invention.
FIG. 6 is a view for illustrating a cross section taken along the line VI-VI of FIG. 5.
FIG. 7 is a view for illustrating a cross section taken along the line VII-VII of FIG. 5.

### Description of Embodiments

Now, a multiblade blower according to embodiments of the present invention is described with reference to the accompanying drawings. Note that, in the drawings, the same reference symbols represent the same or corresponding parts.

### First Embodiment

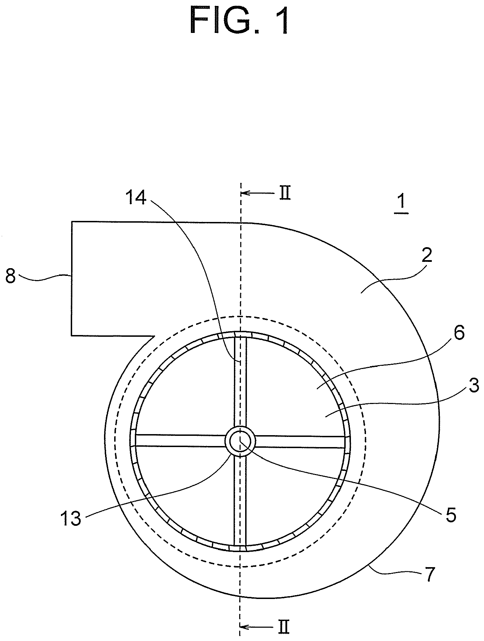

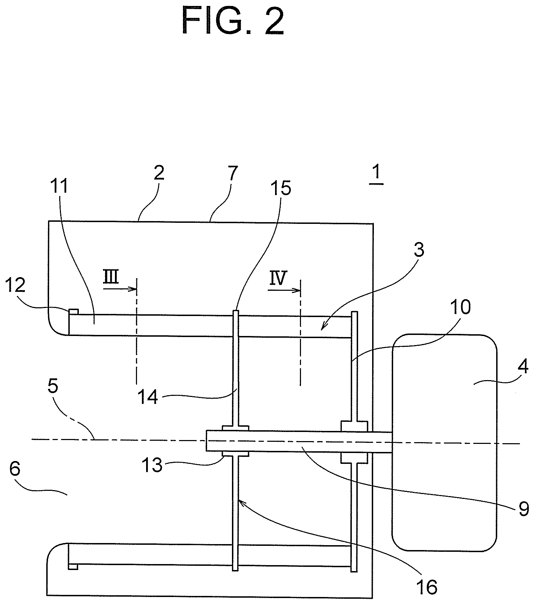

FIG. 1 is an external view of a multiblade blower according to a first embodiment of the present invention, for illustrating a state in which an air inlet described later corresponds to a front side of the drawing sheet and the multiblade blower is viewed toward the air inlet. FIG. 2 is a view for illustrating a cross section of the multiblade blower taken along the line II-II of FIG. 1.

A multiblade blower 1 is an air blower to be used in, for example, an air conditioner or a ventilation fan, and includes a casing 2, an impeller 3, and a drive motor 4 serving as a drive source. The drive motor 4 and the impeller 3 share a rotation axis 5. In the description, a direction parallel to the rotation axis 5 is referred to as a rotation axis direction. A radiation direction of a straight line starting from the rotation axis 5 as the end point in a plane perpendicular to the rotation axis 5 is referred to as a radial direction. A side of the radial direction, which is closer to the rotation axis 5, is referred to as an inner peripheral side. A side of the radial direction, which is far from the rotation axis 5, is referred to as an outer peripheral side.

The casing 2 is, for example, a scroll casing, and includes an air inlet 6, a scroll wall 7, and an air outlet 8. The scroll wall 7 forms a scroll shape as an enlarging air duct in a cross section perpendicular to the rotation axis 5. The air inlet 6 is an opening formed by an annular portion having a bellmouth shape. The air inlet 6 is formed on one side surface of the casing 2, and the rotation axis 5 extends to pass through the center of the opening. The air outlet 8 is formed in a plane of the casing 2 in a swirling direction of the scroll shape.

The drive motor 4 is arranged on an outside of a side surface of the casing 2 on a side opposite to the air inlet 6. A motor shaft 9 of the drive motor 4 passes through the casing 2 to extend along the rotation axis 5 inside the casing 2. Further, the motor shaft 9 serving as a drive shaft protrudes toward the air inlet 6.

The impeller 3 is a centrifugal fan such as a sirocco fan. The impeller 3 includes a plurality of centrifugal blades 11 and a main plate 10 having a substantially disc-like shape, and is received in the casing 2. The main plate 10 is fixed to the motor shaft 9 in the vicinity of an inner wall surface of the casing 2 on the side opposite to the air inlet 6.

The plurality of centrifugal blades 11 extend to be elongated along a direction of the rotation axis 5, and are positioned so as to form a cylindrical shape. Further, the plurality of centrifugal blades 11 are arranged along a periphery of the main plate 10, and are arrayed to be equiangularly separated from each other so as to form an annular shape. An annular member 12 for reinforcement is fitted to end portions of the plurality of centrifugal blades 11 on the air inlet 6 side. An outer peripheral ring 15 has a shape covering outer peripheral sides of the centrifugal blades 11, and hence an outer diameter of the outer peripheral ring 15 is larger than an outer diameter of the centrifugal blades 11.

Further, an intermediate support 16 is arranged in an internal space (radially inner space) of the plurality of centrifugal blades 11 having a cylindrical shape. The intermediate support 16 is positioned between the main plate 10 and the air inlet 6, and is supported by the motor shaft 9. The intermediate support 16 includes an annular hub 13, a plurality of connecting portions 14, and the outer peripheral ring 15. The hub 13 is fixed in the vicinity of a distal end of the motor shaft 9. The plurality of connecting portions 14 extend radially from the rotation axis 5, more specifically, are arranged radially on an outer periphery of the hub 13. The outer peripheral ring 15 is arranged so as to connect together radially outer sides of the plurality of connecting portions 14. The centrifugal blades 11 are also held by the intermediate support 16 continuous from the motor shaft 9 at a substantially center position in the rotation axis 5 direction.

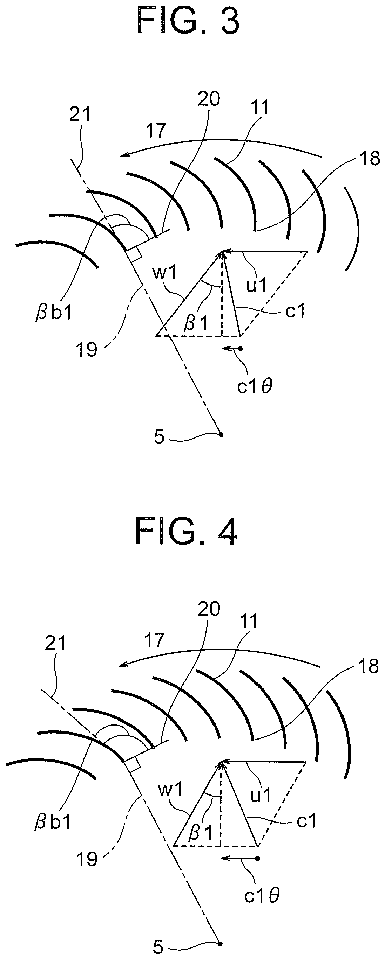

Referring to FIG. 3 and FIG. 4, description is given of a blade shape of each centrifugal blade 11, these figures illustrate the inventive aspect of the present invention. FIG. 3 and FIG. 4 are views for illustrating the blade shape of each centrifugal blade. More specifically, FIG. 3 and FIG. 4 are illustrations of cross sections of each centrifugal blade respectively taken along the arrow III and the arrow IV of FIG. 2. The arrow 17 indicates a rotation direction.

In the multiblade blower according to the first embodiment, the shape of the centrifugal blade 11 varies between a region on an upstream side with respect to the intermediate support 16 (illustrated in FIG. 3) and a region on a downstream side with respect to the intermediate support 16 (illustrated in FIG. 4).

The end point of the centrifugal blade 11 on an inlet side (inner peripheral side) is referred to as a leading edge 18. Assuming that a straight line crossing, at a right angle, a straight line 19 (the radial line) passing through the rotation axis 5 and the leading edge 18 and extending toward a rear side in the rotation direction 17 is referred to as a straight line 20 (the inner peripheral tangent line), an angle formed by a tangent line 21 (the blade tangent line) of the leading edge 18 and the above-mentioned straight line 20 is referred to as a blade inlet angle βb1.

According to the present invention, in the multiblade blower according to the first embodiment, a blade inlet angle βb1 in the region of the centrifugal blade 11 on the downstream side with respect to the intermediate support 16 (illustrated in FIG. 4) is set larger than a blade inlet angle βb1 in the region of the centrifugal blade 11 on the upstream side with respect to the intermediate support 16 (illustrated in FIG. 3).

Next, an actuation of the multiblade blower 1 is described.

In the multiblade blower, when the drive motor 4 is operated, the centrifugal blades 11 are rotated through intermediation of the motor shaft 9, the main plate 10, and the hub 13. With this, outside air is sucked into the impeller 3 through the air inlet 6, and is blown into the casing 2 due to an effect of pressure rise by the impeller 3. Then, the outside air is reduced in speed by the enlarging air duct formed by the scroll wall 7 of the casing 2, and is recovered to be moved only by static pressure, to thereby be blown out to the outside through the air outlet 8. In this manner, the air is blown.

The arrows of FIG. 3 and FIG. 4, which are illustrated on a lower side (rotation axis side) with respect to the leading edges 18 in the blade cross section, form speed triangles for illustrating a state of the flow on the inlet side of the centrifugal blade 11. The flow into the impeller 3 through the air inlet 6 of the casing 2 to flow along the rotation axis 5 receives a force from the connecting portions 14 in the rotation direction when passing through the intermediate support 16. As a result, in the region of the centrifugal blade 11 on the downstream side with respect to the intermediate support 16, a swirling-direction component c1θ of an absolute flow c1 flowing into the centrifugal blade 11, which is parallel to an inlet peripheral speed u1, is larger than a swirling-direction component c1θ of the absolute flow c1 flowing into the centrifugal blade 11 in the region on the upstream side with respect to the intermediate support 16. Therefore, a relative flow w1 flowing into the centrifugal blade 11 also varies between the region on the upstream side and the region on the downstream side. In the region on the downstream side with respect to the intermediate support 16, the flow enters the centrifugal blade 11 at a smaller inflow angle β1 than in the region on the upstream side with respect to the intermediate support 16.

As described above, in the first embodiment and according to the present invention, the blade inlet angle βb1 in the region of the centrifugal blade 11 on the downstream side with respect to the intermediate support 16 is set larger than the blade inlet angle βb1 in the region of the centrifugal blade 11 on the upstream side with respect to the intermediate support 16. Thus, also on the downstream side with respect to the intermediate support 16, the flow can enter the leading edge 18 of the centrifugal blade 11 at an appropriate angle. With this, reduction of air-sending performance, which may be caused when the flow enters the centrifugal blade 11 at an improper angle, is reduced. As a result, it is possible to provide the multiblade blower 1 secured in high flow rate and reduced in noise.

### Second Embodiment

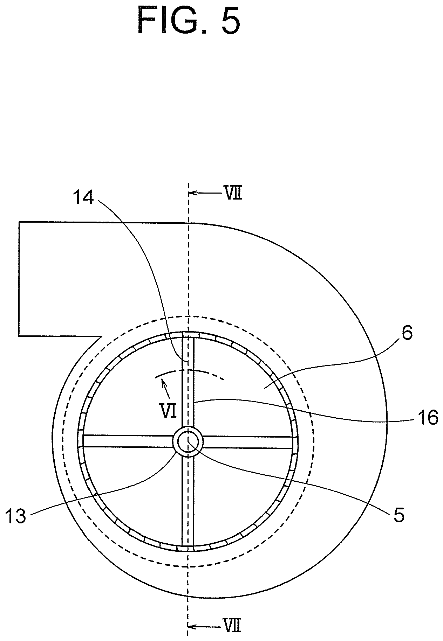

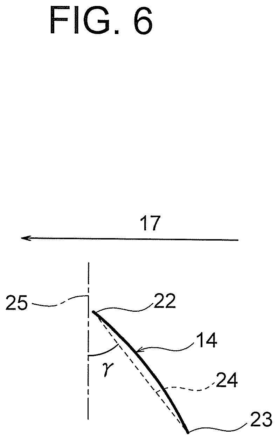

Next, a second embodiment of the present invention is described referring to FIG. 5, FIG. 6, and FIG. 7. Whereas the first embodiment describes the inventive aspect, this embodiment describes a further aspect. FIG. 5 is an external view of a multiblade blower 1 according to the second embodiment, for illustrating a state in which the air inlet 6 corresponds to a front side in the drawing sheet and the multiblade blower 1 is viewed toward the air inlet. FIG. 6 is a view for illustrating a shape of the connecting portion 14 of the intermediate support 16 according to the second embodiment, specifically, for illustrating an arc cross section about the rotation axis 5, which is developed into a plane. Further, FIG. 6 corresponds to a cross section taken along the arrow IV of FIG. 5. An upper side in the drawing sheet of FIG. 6 corresponds to the air inlet 6 side, and a lower side in the drawing sheet of FIG. 6 corresponds to the main plate 10 side. A direction from the right side to the left side in the drawing sheet (arrow 17) corresponds to a rotation direction of the impeller 3. Further, except fort he parts described below, the second embodiment is similar to the first embodiment.

The connecting portion 14 has a plate shape. An end portion on the air inlet side in FIG. 5 is referred to as an upstream end 22, and an end portion on a side opposite to the air inlet side in FIG. 5 is referred to as a downstream end 23. In FIG. 5, the upstream end 22 is positioned forward with respect to the downstream end 23 in the rotation direction. That is, the connecting portion 14 has a blade shape of an axial-flow fan, in which the air inlet 6 side on the upper side in the drawing sheet corresponds to the upstream side, and the lower side in the drawing sheet corresponds to the downstream side.

In the multiblade blower according to the second embodiment, the cross section of each of the connecting portions 14 of the intermediate support 16 has the blade shape, and the connecting portions 14 function as the axial-flow fan. Thus, performance of sending the outside air from the air inlet 6 to the main plate 10 side is high. Even when a dimension of the impeller 3 in the rotation axis direction is large, the air can be supplied to a region of each centrifugal blade 11 in the vicinity of the main plate 10. Even in a multiblade blower in which a dimension in the rotation axis direction is increased so as to attain a high flow rate, the volume of the air passing through the centrifugal blade can be uniformized in the rotation axis direction, thereby being capable of reducing increase in noise, which may be caused when the flow speed is locally high. Therefore, according to the air blower of this embodiment, it is possible to provide the multiblade blower increased in flow rate and reduced in noise.

Supplementary description is given of the shape of each of the connecting portions 14 functioning as the axial-flow fan. In FIG. 6, an angle formed by a straight line (chord line) 24 passing through the upstream end 22 and the downstream end 23 and a straight line 25 parallel to the rotation axis is referred to as a stagger angle γ. It is desired that the stagger angle γ be reduced when a radius about the rotation axis is small, and that the stagger angle γ be increased when the radius is large.

A peripheral speed of the rotation about the rotation axis 5 is increased at a position increased in distance (radius) from the rotation axis. On the other hand, a speed of the air flowing through the impeller 3 along the rotation axis direction (speed of air from the upper side to the lower side in the drawing sheet of FIG. 6) is less liable to be changed depending on the radial position.

Therefore, the stagger angle γ of the connecting portion 14 is increased along with the increase of the radius, thereby being capable of reducing turbulence of the air passing through the connecting portion 14, which may be caused due to deviation of the angle between the shape of the connecting portion 14 and the relative flow of the air when viewed from the connecting portion 14. As a result, it is possible to reduce the increase in noise, which may be caused when the turbulent flow of a wake of the connecting portion 14 flows into the centrifugal blade 11 of the impeller 3.

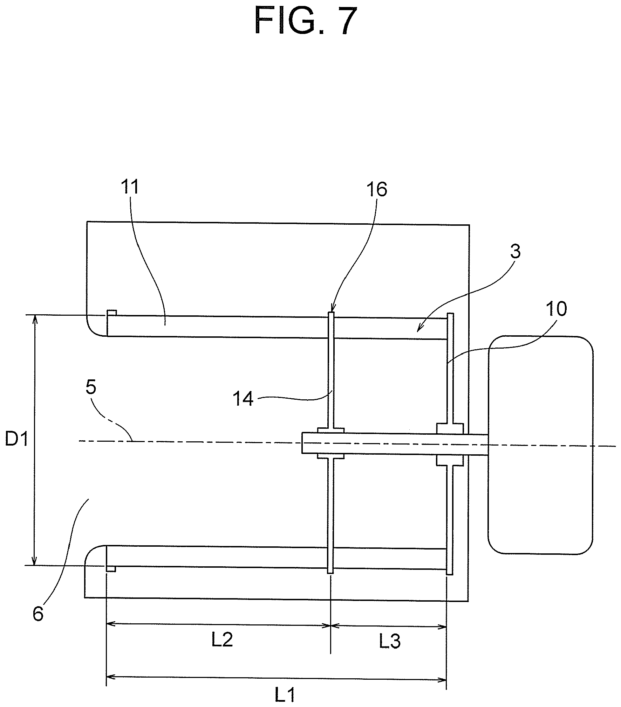

Referring to FIG. 7, supplementary description is given of the dimensions and the position of the impeller 3. FIG. 7 is a view for illustrating the dimensions of the impeller. An outer diameter of the impeller 3 is represented by D1, a dimension of the impeller 3 in the rotation axis 5 direction is represented by L1, a distance in the impeller 3 from an end portion on the air inlet 6 side to the intermediate support 16 is represented by L2, and a distance in the impeller 3 from the intermediate support 16 to the main plate 10 is represented by L3.

As described in the technical document above, the dimension of the related-art general multiblade blower in the rotation axis direction without the intermediate support 16 functioning as the axial-flow fan is appropriately set up to about 0.5 time as large as D1. In the multiblade blower 1 of the second embodiment, the pressure increasing performance by the intermediate support 16 is exerted. Thus, the distance L2 in the impeller 3 from the end portion on the air inlet 6 side to the position connected to the intermediate support 16 is appropriately set to from about 0.5 time up to about 1.0 time as large as D1. Further, the distance in the impeller 3 from the position connected to the intermediate support 16 to the main plate 10 is appropriately set up to about 0.5 time as large as D1. Thus, the dimension L1 of the impeller 3 in the rotation axis 5 direction is appropriately set to about 1.0 time to about 1.5 times as large as D1.

Further, as described above, due to the function of the impeller 3, the dimension of the impeller 3 in the rotation axis 5 direction in the multiblade blower 1 can be increased. On the other hand, in general, when the dimension in the rotation axis direction is large, there is a problem in that runout of the impeller during the rotation is liable to be significant due to centrifugal forces generated in the blades during the rotation, displacement between the center of gravity of the impeller and the rotation axis, and the like. However, in the multiblade blower 1 of the second embodiment, the connecting portions 14 connect together the motor shaft 9 and the centrifugal blades 11. That is, the centrifugal blades 11 are held not only by the main plate 10 but also by the intermediate support 16 at a distance from the main plate 10. Thus, the connecting portions 14 of the intermediate support 16 contributing to the increase in flow rate and the reduction of noise also contribute to the support of the impeller 3, thereby also being capable of obtaining an advantage against the above-mentioned problem in that the runout during the rotation can be suppressed to be small.

Although the details of the present invention are specifically described above with reference to the first embodiment, it is apparent that persons skilled in the art may adopt various modifications based on the basic technical concepts and teachings of the present invention which is solely defined by the appended claims.

### Reference Signs List

1 multiblade blower, 2 casing, 3 impeller, 5 rotation axis, 6 air inlet, 9 motor shaft (drive shaft), 10 main plate, 11 centrifugal blade, 14 connecting portion, 16 intermediate support

## Claims

1. A multiblade blower (1), comprising:
a casing (2) having only one air inlet (6); and
an impeller (3) arranged in the casing (2) so as to be rotatable, wherein the impeller (3) comprises a main plate (10) fixed to a drive shaft (9) at the side opposite to the air inlet, and a plurality of centrifugal blades (11) positioned so as to form a cylindrical shape,
wherein :
an intermediate support (16) is arranged in an internal space of the plurality of centrifugal blades (11),
the intermediate support (16) is positioned between the main plate (10) and the air inlet (6), and is supported by the drive shaft (9),
the plurality of centrifugal blades (11) are held by the intermediate support (16) as well as being held by the main plate (10),
the intermediate support (16) comprises a plurality of connecting portions (14),
the plurality of connecting portions (14) extend radially outward from the drive shaft (9) in a radial shape,
the plurality of connecting portions (14) each have a blade shape of an axial-flow fan, and
assuming that the end point of the centrifugal blade (11) on an inner peripheral side is referred to as a leading edge (18), a straight line crossing, at a right angle, a radial line (19) passing through the rotation axis (5) and the leading edge (18) and extending toward a rear side in the rotation direction (17) is referred to as an inner peripheral tangent line (20), a tangent line of the blade (11) passing through the leading edge (18) of the blade (11) is referred to as a blade tangent line (21), and an angle formed by the blade tangent line (21) and the inner peripheral tangent line (20) is referred to as a blade inlet angle, the multiblade blower being **characterized in that**
for each of the plurality of centrifugal blades the blade inlet angle in a region of the blade (11) on a downstream side with respect to the intermediate support (16) is set larger than the blade inlet angle in a region of the blade (11) on an upstream side with respect to the intermediate support (16).

2. A multiblade blower (1) according to claim 1, wherein a distance in the impeller (3) from an end portion on the air inlet side to a position connected to the intermediate support (16) is from about 0.5 time to about 1.0 time as large as an outer diameter of the impeller (3).

3. A multiblade blower (1) according to claim 2, wherein a dimension of the impeller (3) in a rotation axis direction is from 1.0 time to 1.5 times as large as the outer diameter of the impeller (3).

## Patentansprüche

1. Mehrschaufelgebläse (1), umfassend:
ein Gehäuse (2), das nur einen Lufteinlass (6) aufweist; und
ein Flügelrad (3), das im Gehäuse (2) derart angeordnet ist, dass es rotierbar ist, wobei das Flügelrad (3) eine Hauptplatte (10), die auf der dem Lufteinlass entgegengesetzten Seite auf einer Antriebswelle (9) befestigt ist, und eine Vielzahl von Zentrifugalschaufeln (11), die derart platziert sind, dass sie eine zylindrische Form ausbilden, umfasst,
wobei ein Zwischenträger (16) in einem Innenraum der Vielzahl von Zentrifugalschaufeln (11) angeordnet ist, wobei
der Zwischenträger (16) zwischen der Hauptplatte (10) und dem Lufteinlass (6) angeordnet ist und auf der Antriebswelle (9) gelagert ist, wobei
die Vielzahl von Zentrifugalschaufeln (11) vom Zwischenträger (16) sowie von der Hauptplatte (10) gehalten wird, wobei
der Zwischenträger (16) eine Vielzahl von Verbindungsabschnitten (14) umfasst, wobei
die Vielzahl von Verbindungsabschnitten (14) sich radial von der Antriebswelle (9) weg in einer radialen Form nach außen erstreckt, wobei
die Vielzahl von Verbindungsabschnitten (14) jeweils eine Schaufelform eines Axialventilators aufweist, und wobei,
unter der Annahme, dass der Endpunkt der Zentrifugalschaufel (11) auf einer Innenumfangsseite als Vorderkante (18) bezeichnet wird, eine gerade Linie, die im rechten Winkel eine Radiallinie (19) schneidet, die durch die Drehachse (5) und die Vorderkante (18) hindurchtritt und sich in Drehrichtung (17) zu einer Rückseite hin erstreckt, als Innenumfangstangentiallinie (20) bezeichnet wird, eine Tangentiallinie der Schaufel (11), die durch die Vorderkante (18) der Schaufel (11) hindurchtritt, als Schaufeltangentiallinie (21) bezeichnet wird, und ein durch die Schaufeltangentiallinie (21) und die Innenumfangstangentiallinie (20) ausgebildeter Winkel als Schaufeleinlasswinkel bezeichnet wird, das Mehrschaufelgebläse **dadurch gekennzeichnet ist, dass**
der Schaufeleinlasswinkel für jeden der Vielzahl von Zentrifugalschaufeln in einer Region der Schaufel (11) auf einer Stromabwärtsseite in Bezug auf den Zwischenträger (16) größer eingestellt ist als der Schaufeleinlasswinkel in einer Region der Schaufel (11) auf einer Stromaufwärtsseite in Bezug auf den Zwischenträger (16).

2. Mehrschaufelgebläse (1) nach Anspruch 1, wobei im Flügelrad (3) der Abstand von einem Endabschnitt auf der Lufteinlassseite zu einer Position, die mit dem Zwischenträger (16) verbunden ist, etwa 0,5-mal bis etwa 1,0-mal größer ist als der Außendurchmesser des Flügelrads (3).

3. Mehrschaufelgebläse (1) nach Anspruch 2, wobei eine Dimension des Flügelrads (3) in einer Drehachsenrichtung 1,0-mal bis 1,5-mal größer ist als der Außendurchmesser des Flügelrads (3).

## Revendications

1. Souffleur à aubes multiples (1), comprenant :
un boîtier (2) comportant une seule entrée d'air (6) ; et
une roue à aubes (3) agencée dans le boîtier (2) de manière à pouvoir tourner, la roue à aubes (3) comprenant une plaque principale (10) fixée à un arbre d'entraînement (9) du côté opposé à l'entrée d'air, et une pluralité de aubes centrifuges (11) positionnées de manière à former une forme cylindrique,
dans lequel un support intermédiaire (16) est agencé dans un espace interne de la pluralité de aubes centrifuges (11),
le support intermédiaire (16) est positionné entre la plaque principale (10) et l'entrée d'air (6), et est supporté par l'arbre d'entraînement (9),
la pluralité de aubes centrifuges (11) sont maintenues par le support intermédiaire (16) et sont maintenues également par la plaque principale (10),
le support intermédiaire (16) comprend une pluralité de parties de connexion (14),
la pluralité de parties de connexion (14) s'étendent radialement vers l'extérieur depuis l'arbre d'entraînement (9) selon une forme radiale,
la pluralité de parties de connexion (14) ont chacune une forme d'aube d'un ventilateur à flux axial, et
en supposant que le point d'extrémité de l'aube centrifuge (11) sur un côté périphérique intérieur est référencé en tant que bord d'attaque (18), une ligne droite croisant à angle droit une ligne radiale (19) passant par l'axe de rotation (5) et le bord d'attaque (18) et s'étendant vers un côté arrière dans la direction de rotation (17) est référencé en tant que ligne tangente périphérique interne (20), une ligne tangente de l'aube (11) passant à travers le bord d'attaque (18) de l'aube (11) est référencée en tant que ligne tangente d'aube (21), et un angle formé par la ligne tangente d'aube (21) et la ligne tangente périphérique intérieure (20) est référencé en tant qu'angle d'entrée d'aube, le ventilateur à aubes multiples étant **caractérisé en ce que**
pour chacune de la pluralité de aubes centrifuges, l'angle d'entrée d'aube dans une zone de la (11) du côté aval par rapport au support intermédiaire (16) est réglé plus grand que l'angle d'entrée d'aube dans une zone de l'aube (11) du côté amont par rapport au support intermédiaire (16).

2. Soufflante à aubes multiples (1) selon la revendication 1, dans laquelle une distance dans la roue à aubes (3) d'une partie d'extrémité du côté entrée d'air à une position connectée au support intermédiaire (16) est d'environ 0,5 fois à environ 1,0 fois aussi grande que le diamètre extérieur de la roue à aubes (3).

3. Soufflante à aubes multiples (1) selon la revendication 2, dans laquelle une dimension de la roue à aubes (3) dans une direction d'axe de rotation est de 1,0 fois à 1,5 fois le diamètre extérieur de la roue à aubes (3).
